(19) Europäisches Patentamt
European Patent Office
Office européen des brevets

(11) **EP 4 366 153 A1**

(12) **EUROPEAN PATENT APPLICATION**

(43) Date of publication:
**08.05.2024 Bulletin 2024/19**

(21) Application number: **22205587.3**

(22) Date of filing: **04.11.2022**

(51) International Patent Classification (IPC):
*H02P 6/185* (2016.01)    *H02P 25/22* (2006.01)

(52) Cooperative Patent Classification (CPC):
**H02P 6/185; H02P 25/22**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Gamesa Renewable Energy A/S**
**7330 Brande (DK)**

(72) Inventors:
• **Azar, Ziad**
  **Sheffield, S10 4ED (GB)**

• **Duke, Alexander**
  **Sheffield, S10 5SN (GB)**
• **Freire, Nuno Miguel Amaral**
  **7330 Brande (DK)**
• **Godridge, Paul**
  **Cheadle, SK8 7HX (GB)**
• **Hartley, Joseph**
  **Crewe, CW2 7JY (GB)**
• **Wu, Zhan-Yuan**
  **Sheffield, S10 4BB (GB)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **ROTOR POSITION DETERMINATION OF A MULTIPLE WINDING SET GENERATOR**

(57)    It is described a method of observing a rotor position (18, 18') of an electrical generator (5) comprising multiple winding sets, the method comprising: applying a first high frequency signal (12) to a first winding set; operating or controlling at least two of the winding sets differently; measuring a first response (15); determining a first value (18) of the rotor position based on the first response (15).

FIG 1

EP 4 366 153 A1

**Description**

Field of invention

The present invention relates to a method and to a corresponding arrangement of observing a rotor position of an electrical generator comprising multiple winding sets. Furthermore, the present invention relates to a generator system and further relates to a wind turbine.

Art Background

Rotor position of a generator may be required for controlling the generator, for example using vector control. The generator may comprise multiple winding sets which may be connected to respective individual converters. Conventionally, position estimation has been performed by high frequency injection (HFI) for zero or low speed operations. Other conventional methods may rely on the usage of encoders for rotor position determination.

Concentrated winding fractional slot generators may have a relatively low saliency ratio (q-axis inductance divided by d-axis inductance, where the d- and q-axis are defined in the synchronous rotating reference frame) which may make position estimation conventionally very difficult.

It has been observed that the accuracy of the rotor position determination is not satisfactory in all circumstances or requires complex equipment.

Thus, there may be a need for a method and a corresponding arrangement of observing a rotor position of an electrical generator comprising multiple winding sets, wherein accuracy and/or reliability of the rotor position determination is improved. There may further be a need for a generator system and a wind turbine being capable of performing the method or implementing the method.

Summary of the Invention

This need may be met by the subject matter according to the independent claims. Advantageous embodiments of the present invention are described by the dependent claims.

According to an embodiment of the present invention it is provided a method of observing a rotor position of an electrical generator comprising multiple winding sets, the method comprising applying a first high frequency signal to a first winding set; operating or controlling at least two of the winding sets differently; measuring a first response; determining a first value of the rotor position based on the first response.

The method may for example be performed by a portion or a module of a generator controller or in particular a wind turbine controller. The method may be implemented in software and/or hardware.

The rotor position may relate to the electrical position of a rotor rotating relative to a stator of the electrical generator. The electrical rotor position may be related or may be proportional to a mechanical rotor position, which indicates the circumferential angle position of the rotor. The electrical rotor position may be derived from the mechanical rotor position using a multiplication factor which may depend on the number of poles.

The electrical generator may be a synchronous generator. The generator comprises a stator and a rotor. The generator may comprise a rotor at which plural permanent magnets are mounted or may comprise electromagnets.

The generator may be an integer slot generator or a fractional slot generator. The number of slots divided by the number of poles is an integer number for an integer slot generator but is a rationale number (not being an integer) for a fractional slot generator.

The generator may comprise two, three, four, five, six, seven, eight or even a high number of winding sets. The stator comprises plural teeth arranged along the circumferential direction having slots in between. Portions of the winding sets may be wound at least partially within the slots. Winding sets wound in different winding topologies, such as concentrated winding topology or distributed winding topology, may be supported.

In the case of a concentrated winding topology, a portion of one wire of a winding set may be wound around a tooth such that the portion of the wire occupies two immediately adjacent slots. In the case of a distributed winding topology, a portion of a wire of a winding set may be arranged in two slots, wherein one or more other slots are circumferentially in between the two slots.

Embodiments of the present invention may be applied to a generator having winding sets in the concentrated winding topology or may be applied to a generator having winding sets in a distributed winding topology.

Particular embodiments may be applied to a concentrated winding fractional slot generator. In spite of a relatively low saliency ratio, the determination of the rotor position may be more accurate or more reliable than in conventional methods.

Embodiments of the present invention may provide high frequency injection for position estimation which may rely on the saliency of the machine. Embodiments of the present invention provide several variants of the high frequency injection, such as transient voltage vector injection, pulse width modulation signal injection or persistent carrier signal injection. Thereby, the persistent carrier injection may involve rotating sinusoidal signal injection in the stationary reference frame or the pulsating sinusoidal signal injection in the estimated synchronous rotating reference frame. Particular embodiments of the present invention provide as high frequency injection the pulsating sinusoidal injection on the d-axis (of a d-q reference frame which rotates with the fundamental electrical frequency of the generator). However, other embodiments may utilize other HFI position estimation techniques.

The first high frequency signal may be a voltage signal or a current (signal) which is injected into the first winding set. The first high frequency signal may have a frequency which is higher than a fundamental frequency, for example, between two times to twenty times as high as a fundamental frequency of the generator. Typically for position estimation with HFI, the frequency may be a few hundred Hz.

The first high frequency signal may be applied to the first winding set by means of a converter which is connected to the first winding set, i.e. to all wires providing different phases of the first winding set.

The generator may comprise a first winding set and at least one second winding set. To the one or more other(s) than the first winding set, either no high frequency signal may be applied at all or a respective high frequency signal may be applied which may differ from the first high frequency signal. Operating or controlling at least two of the winding sets differently may for example involve applying a high frequency signal not to all winding sets or apply different high frequency signals to at least two different winding sets.

Measuring the first response may involve measuring a response current which is carried in the first winding set or which is carried by one of the other winding sets or several of the other winding sets. Preferably, the first response is measured as a current being carried in the first winding set. The first value of the rotor position may then be determined using the first response as a feedback by for example bandpass filtering and demodulating the response current. Thereby, conventional methods may be applied for determining the first value of the rotor position based on the first response.

When at least two of the winding sets are operated or controlled differently, the reliability and/or accuracy of the rotor position determination may be improved. Embodiments of the present invention may take advantage that additional opportunities exist when using multiple winding sets in a generator. The additional opportunities may involve that the high frequency signal can be injected in a manner to potentially improve accuracy of the position estimation. Embodiments of the present invention may take advantage of the mutual coupling between the winding sets to enhance the capability of the position estimation with high frequency injection. Embodiments of the present invention may in particular provide improvements during a zero or low rotational speed operation of the generator and may also provide advantages in particular for winding sets having concentrated winding topology.

According to an embodiment of the present invention, applying the first high frequency signal to the first winding set includes injecting a first high frequency voltage, in particular pulsating sinusoidal injection in a d-axis, into the first winding set.

Injecting the first high frequency voltage may be performed by means of a converter connected to free ends of the first winding set. The converter may be controlled by means of a voltage reference which comprises a high frequency portion. The converter may comprise plural controllable switches which may be controlled via respective control signals supplied to the respective gates of the controllable switches. For controlling the generator, pulse width modulation (PWM) may be applied. Based on the voltage reference, a respective gate driver portion may provide pulse width modulation signals to (gates of) the respective controllable switches such that a desired first high frequency current is injected into or carried in the first winding set.

According to an embodiment of the present invention, the first response is due to the first high frequency injection and measuring the first response includes measuring a first current in the first winding set, wherein determining the first value of the rotor position in particular includes at least one of bandpass filtering a measured first current; demodulating a measured and in particular filtered first current; polarity detection and position observance based on the demodulated current.

Injection of the first high frequency voltage precedes the measurement of the first current in the first winding set, and they are executed typically within a control cycle, for example in a period of 0.4 ms. Additionally or alternatively, a response may also be measured in one or more of the other winding sets to which no or a different high frequency signal might have been applied. In particular, several response currents in several different winding sets, may be considered for determining the rotor position or a first value of the rotor position.

The measured first current may be separated into a d-component and a q-component through a conventional transformation from the stationary frame to the synchronous rotating frame with use of the estimated rotor position. These d and q components would contain frequency components corresponding to the injected high frequency.

The bandpass filtering of the d- or q- current may filter out components of the current which do not belong to the high frequency signal injected. Thus, the bandpass filtering may attenuate portions of the first current having frequencies very different from the frequency of the first high frequency injection signal. The demodulation process, including a low pass filter, is applied to the bandpass filtered d- or q-current for extraction of the amplitude of each signal. They may be named as demodulated d- or q-component of current. The demodulated q-component may be utilized in a position observer and the demodulated d-component may be utilized in a polarity detection module. Thereby, conventional equipment and methodology may be supported and applied, thereby simplifying the method.

According to an embodiment of the present invention, injecting the first high frequency voltage into the first winding set comprises controlling a first converter connected to the first winding set by adding an offset voltage (e.g. Vdhf) to a voltage reference, in particular in a d-axis of a coordinate frame rotating with a fundamental electrical frequency, wherein the first high frequency current in particular has a frequency higher than a fundamental frequency.

The offset voltage may be a high frequency offset voltage which may be generated by a signal generator, in particular high frequency injection generator, in order to generate a high frequency signal having a desired frequency, amplitude and phase. Thereby, a conventional converter may be utilized.

According to an embodiment of the present invention, operating at least two of the winding sets differently includes applying a high frequency signal to fewer than all winding sets; measuring responses at least for the winding set to which a high frequency signal is applied; determining one of more values of the rotor position based on the responses.

When for example the generator comprises exactly two winding sets, only the first high frequency signal may be applied to the first winding set without applying any high frequency signal to the second winding set. Thereby, the method may be simplified and accuracy and/or reliability of the position determination may be improved.

According to an embodiment of the present invention, operating at least two of the winding sets differently includes applying a second high frequency signal to a second winding set, the second high frequency signal being different from the first high frequency signal; measuring a second response; determining a second value of the rotor position based on the second response.

The second high frequency signal may be different in one or more characteristics, such as amplitude, frequency and/or phase from the first high frequency signal. When the second high frequency signal is different from the first high frequency signal, accuracy of the rotor position determination may be improved. The second response may involve to measure a second current in the second winding set. Additionally or alternatively, the second response may also be measured in for example the first winding set or another winding set being different from the first winding set and the second winding set. According to particular embodiments, measuring the second response and determining the second value of the rotor position based on the second response may be performed in a similar or same manner as measuring the first response and determining the first value of the rotor position based on the first response.

According to an embodiment of the present invention, high frequency signals may be applied to all winding sets and the high frequency signals may be mutually different from each other. Further, for each winding set, a respective response current may be measured as a response and respective value of the rotor position for this particular winding set may be determined based on the respective response measured in this winding set.

According to an embodiment of the present invention, the first winding set is connectable to a first converter, wherein the second winding set is connectable to a second converter, wherein during injection of the first high frequency voltage into the first winding set the second winding set is disconnected from the second converter or the second winding set is connected to the second converter and the second converter is not-operated or operated.

Thereby, a conventionally utilized configuration is supported. Thereby, the variants of a single set injection and single set operation as well as a single set injection and a dual set operation are supported which may give advantages depending on the particular application and circumstances regarding accuracy and/or reliability of rotor position determination.

According to an embodiment of the present invention, the first high frequency signal differs from the second high frequency signal in at least one characteristic of the following characteristics: an amplitude; a frequency; a phase.

Thereby, plural opportunities are provided to select the second high frequency signal to be different from the first high frequency signal. The first and second high frequency signals may differ in one or more of the above listed characteristics, which may give advantages depending on the application and circumstances.

According to an embodiment of the present invention, the first high frequency signal differs from the second high frequency signal in at least one first characteristic but is equal in at least one second characteristic, wherein the phases of the first and second high frequency signal differ by substantially Pi ($\pi$), wherein in particular amplitudes and frequencies are equal.

When one or more of the characteristics are equal, the method of generating the respective signals may be simplified. The phase difference may account to the particular configuration of the generator, depending on whether the generator is a concentrated winding generator or a distributed winding generator for example.

According to an embodiment of the present invention, the first high frequency signal differs from the second high frequency signal in all characteristics. This embodiment may be selected due to a particular configuration of the generator.

According to an embodiment of the present invention, the first high frequency signal is applied to the first winding set in a time range, wherein the second high frequency signal is applied to the second winding set in the time range. Thus, these signal injections may be applied at the same time.

The application of injection and measurement of response between sets are not exclusive.

According to an embodiment of the present invention, at least one of the following holds: the first and/or second winding set has concentrated or distributed winding topology, the generator is an integer or fractional slot generator, the generator has exactly two or four winding sets, the generator is a permanent magnet generator, the generator is a synchronous electrical generator, each winding set provides plural electrical phases, in particular three phases, the method is applied at a low rotational speed, in particular between 0.0 and 0.2 times a nominal rotational speed, of the rotor of the generator.

Thereby, different configurations and topologies of the generator may be supported. At a relatively low rotational speed, other position determination techniques may not be applicable due to insufficient reliability/accuracy.

It should be understood that features, individually or in any combination, disclosed, described, explained or provided for a method of observing a rotor position of an electrical generator, may also, individually or in any combination, applied to an arrangement for observing a rotor position of an electrical generator according to embodiments of the present invention and vice versa.

According to an embodiment of the present invention it is provided an arrangement for observing a rotor position of an electrical generator comprising multiple winding sets, the arrangement comprising a control section, in particular including multiple converters each connectable to one of the winding sets, adapted: to apply a first high frequency signal to a first winding set; to operate or control at least two of the winding sets differently; a measurement section adapted: to measure a first response; an evaluation section adapted: to determine a first value of the rotor position based on the first response.

The arrangement may be a portion of a controller, in particular generator system controller or wind turbine controller. The control section may in particular comprise respective converters which may be connectable or connected to the different winding sets.

According to an embodiment of the present invention it is provided a generator system, in particular of a wind turbine, including an electrical generator comprising multiple winding sets; an arrangement according to the preceding embodiment, connected to control the generator.

According to an embodiment of the present invention, it is provided a wind turbine, including: a rotor at which plural rotor blades are connected; a generator system, according to the preceding embodiment, the generator being coupled to the rotor.

Embodiments of the present invention propose or involve injecting a high frequency signal into fewer than the total number of channels (winding sets) for position estimation for torque production in full or partial converter operation.

Embodiments of the present invention may provide to inject different high frequency signals (for example different in one or more of magnitude/frequency/phase) into one or more of the winding sets (channels).

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates a wind turbine according to an embodiment of the present invention;

Fig. 2 schematically illustrates a portion of a generator system according to an embodiment of the present invention;

Fig. 3 illustrates a graph with curves regarding rotor position determination according to embodiments of the present invention;

Figs. 4 and 5 illustrate saliency ratios for different generators supported by embodiments of the present invention.

Detailed Description

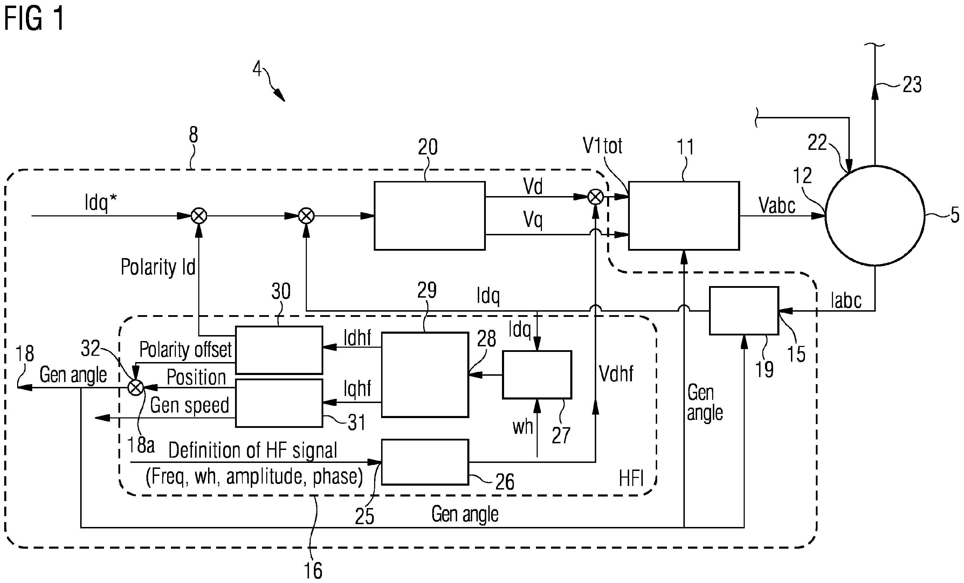

The wind turbine 1 schematically illustrated in **Fig.** 1 comprises a rotor 2 at which plural rotor blades 3 are mounted. The wind turbine 1 further comprises a generator system 4 according to an embodiment of the present invention wherein a generator 5 is coupled to the rotor 2.

The generator system 4 comprises an electrical generator 5 comprising multiple winding sets (which are not illustrated in detail). The generator system 4 further comprises an arrangement 6 according to an embodiment of the present invention which is connected to control the generator 5. In the illustrated embodiment of Fig. 1, the arrangement 6 substantially comprises all elements except the generator 5, the rotor 2 and the rotor blades 3. In other embodiments, the arrangement 6 may be configured in a different manner.

The arrangement 6 comprises a control section 7 which comprises a first control section 8 and a first converter 9 as well as a second control portion 10 and a second converter 11. The control section 7 is configured to apply a first high frequency signal 12 to a first winding set of the generator 5. The control section 7 is further configured to operate or control at least two of the winding sets of the generator 5 differently. The arrangement 6 further comprises a measurement section 13, 14 comprising a first current sensor 13 (and optionally at least one second current sensor 14) which is configured to measure a first response 15. The control section 7 further comprises an evaluation section implemented by a first evaluation section 16 (and optionally a second evaluation section 16') which is adapted to determine a first value 18 of the rotor position based on the first response 15.

The arrangement 6 is configured to carry out a method of observing a rotor position of the electrical generator 5 according to an embodiment of the present invention. In the embodiment illustrated in Fig. 1, the first high frequency signal 12 is a first high frequency voltage which is injected to the first winding set of the generator 5. The first response 15 is a response due to the first high frequency injection and the first response is measured using the first current sensor 13 measuring the first current 15 in the first winding set.

The first response 15 (Iabc) measured by the first current sensor 13 is received by the first control portion 8, in particular by a transformation module 19 which transforms the three-phase current Iabc into currents in the d-q-coordinate frame rotating with the fundamental frequency of the generator. The transformation module 19 further separates the received current into a high frequency component Iqhf and a substantially dc current portion Idq. The high frequency component Iqhf is supplied to the first evaluation section 16, referred to as a HFI observer. The HFI observer 16 thereby determines a first value 18 of the rotor position. This first value is also input to the transformation module 19 in order to properly perform the abc to dq-transformation.

To inject the first high frequency voltage 12 into the first winding set, the first converter 9 which is connected to the first winding set is controlled by adding an offset voltage Vdhf to a voltage reference Vd provided by a current controller 20 based on the current Idq received from the transformation module 19. The offset voltage Vdhf is a signal at the high frequency and is added to the voltage reference Vd by an addition element 21 and the result is supplied to the first controller 9 as a voltage reference (V1tot). The result of adding the offset voltage Vdhf to the voltage reference Vd generated by the first control portion 8 is labelled with reference sign V1tot and is supplied to the first converter 9 as a reference voltage. Based on the voltage reference V1tot, the converter 9 causes the first high frequency voltage 12 to be injected to the first winding set of the generator 5.

Fig. 1 illustrates a variant of operating at least two of the winding sets of the generator 5 differently in that also a second high frequency signal 22 is applied to the second winding set of the generator 5. Further, the second response 23 is measured and a second value 18' of the rotor position is determined based on the second response 23. In particular, the second response 23 is in the illustrated embodiment measured by a second current sensor 14 measuring a current in the second winding set. The second response 23 is received at the second evaluation portion 10 of the control section 7, in particular at another transformation module 19'.

It should be understood that the first control portion 8 and the second control portion 10 of the control section 7 may be substantially configured similar or in an identical manner comprising same or corresponding modules 19', 20', 16', 21' which may function or work similarly as the modules or portions explained with respect to the first control portion 8. The result of adding the offset voltage V'dhf to the reference voltage V'd of the second control portion 10 is referred to as V2tot which is supplied to the second converter 11. Based on this voltage reference V2tot, the second converter 11 generates or causes a second high frequency voltage 22 to be injected into the second winding set of the generator 5.

During injection of the first high frequency voltage 12, the second winding set may be disconnected from the second converter or the second converter 11 may be not operating (also referred to as single set injection and single set operation). According to other embodiments, the second winding set may be connected to the second converter 11 and the second converter 11 may be operated (also referred to as single set injection and dual set operation).

When in other embodiments a first high frequency voltage 12 is injected into the first winding set and a second high frequency voltage 22 is injected into the second winding set, the respective voltages, in particular, Vdhf and Vdhf', may differ in at least one characteristic of for example an amplitude, a frequency or a phase.

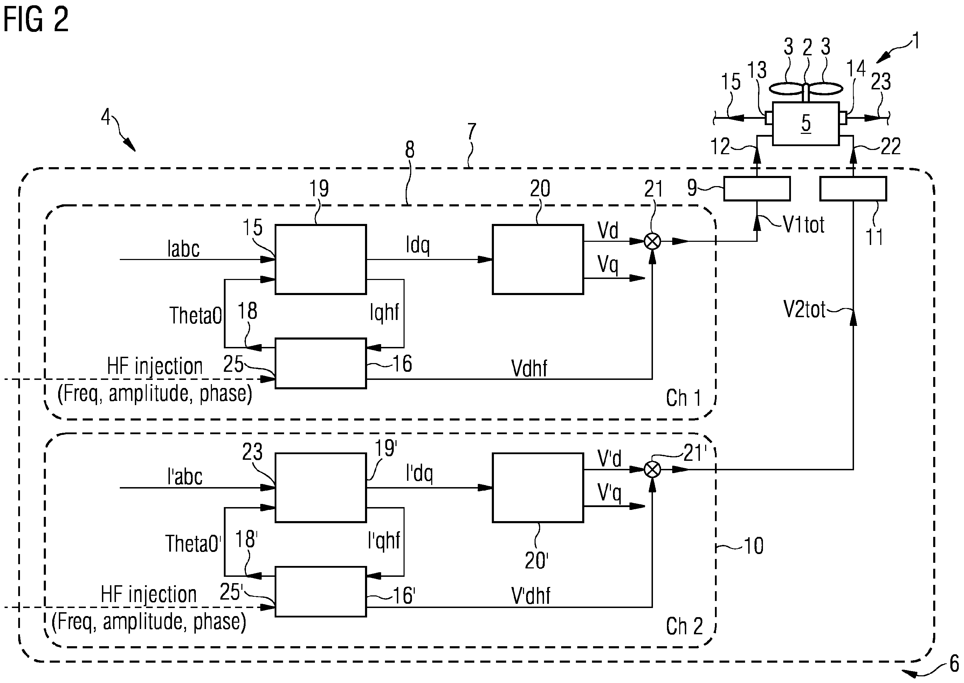

**Fig. 2** schematically illustrates a portion of a generator system 4 according to an embodiment of the present invention, wherein components for controlling the at least one second winding set of the generator 5 are omitted. The portion of the generator system 4 comprises a first control portion 8 which may be similarly or in a same manner configured as the first control portion 8 illustrated in Fig. 1. In Fig. 2, the first evaluation portion 16 is illustrated in more detail. Upon a high frequency signal definition 25 regarding frequency, amplitude and phase, a generation module or high frequency injection generation module 26 generates the first high frequency signal in form of a voltage offset Vdhf. This voltage offset Vdhf is added to the voltage reference Vd and the result is supplied as a reference voltage V1tot to the first converter 11 performing pulse width modulation control. The first evaluation section 16 receives the first response 15 (Iabc) at a transformation module 19. After transforming the first response 15 into the d-q-frame, the result (Idq) is received by a bandpass filter 27 which attenuates all portions of the current which are in frequency spaced apart from the frequency of the high frequency injection signal Vdhf. The filtered current is labelled with reference sign 28 and is received by a demodulator and low-pass filter module 29. The demodulator 29 acts on the current in d- and q-components respectively, and extracts the current amplitude in d- and q-components, resulting in demodulated signals of Idhf and Iqhf. The d-component Idhf is supplied to a polarity detection module 30 and the q-component is supplied to a position observer 31. The polarity detection module 30 thereupon derives a polarity offset in angle of 0 or π for polarity correction, depending on the responses when a positive or negative Id current is supplied. The position observer 31 calculates based on the input Iqhf in a phase-lock-loop the first preliminary position 18a of the rotor position. This generator angle is corrected by adding the polarity offset 32 output by the polarity detection module 30 and is supplied to the transformation module 19 in order to properly perform the park transformation from the current response Iabc (reference sign 15) to the respective value in the d-q frame. Similarly as in Fig. 1, also the second winding set of the generator 5 may be provided with a respective second high frequency current 22 upon which a second response 23 is measured.

In a conventional method, in a dual system concentrated winding generator, HFI would involve injecting an identical high frequency signal into both winding sets simultaneously and observing the effect in the currents. According to embodiments of the present invention, however, different injection currents are utilized for different winding sets with different amplitudes, frequencies and/or phases in each of the systems.

It has been observed by simulation and experimental result that using the same injection signal for several winding sets may be at least inaccurate for position estimation at least for concentrated winding generators. Configurations of injection schemes according to exemplary embodiments are illustrated in the following table 1:

Table 1:

| Schemes | Amplitudes ($v_{hf1}$, $V_{hf2}$) | Frequencies ($\omega_{hf1}$, $\omega_{hf2}$) | Phases ($\varphi_1$, $\varphi_2$) |
| --- | --- | --- | --- |
| #1: Identical dual set injection | $V_{hf1} = V_{hf2}$ | $\omega_{hf1} = \omega_{hf2}$ | $\varphi_1 = \varphi_2$ |
| #2: Single set injection & single set operation | $V_{hf1} \neq 0, V_{hf2} = 0$ | - | - |
| #3: Single set injection & dual set operation | $V_{hf1} \neq 0, V_{hf2} = 0$ | - | - |
| #4: dual set injection with anti-phase | $V_{hf1} = V_{hf2}$ | $\omega_{hf1} = \omega_{hf2}$ | $\varphi_2 = \varphi_1 + \pi$ |

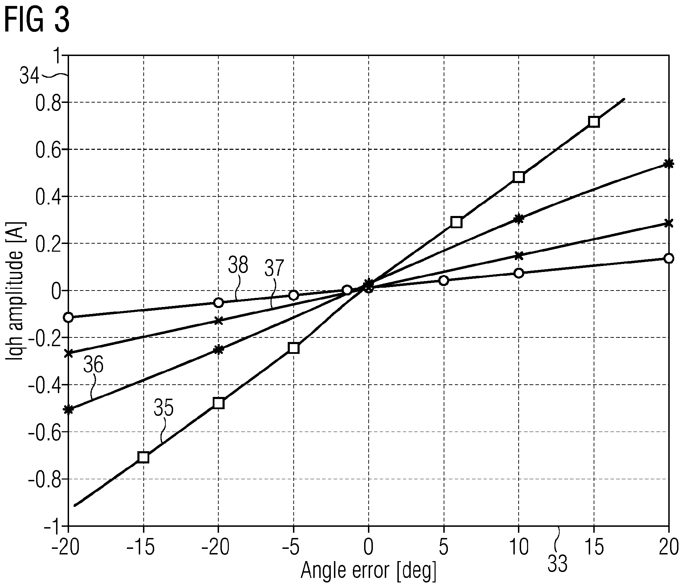

Results of the simulation are provided in **Fig. 3** illustrating in a coordinate system having an abscissa 33 indicating an angle error and having an ordinate 34 indicating the feedback response Iqhf from the high frequency signal injected, a curve 35 indicating dual converter operation and high frequency injection into the first winding set and the second winding set in anti-phase (the phase is shifted by π, as is indicated in the table 1 above), a curve 36 indicating a reduced converter operation (only the first converter 9 is operating and connected to the first winding set) upon injection of a first high frequency current into the first winding set, a curve 37 indicating a dual converter operation and high frequency current injection only in the first winding set and finally a curve 38 indicating a dual converter operation upon high frequency injection into the first winding set as well as in the second winding set (without phase shift).

As a conclusion from the curves in Fig. 3, the higher the amplitude Iqhf (which is used as a feedback for speed estimation and angle regulation), better sensitivity in control is observed. From Fig. 3 it is found that the standard method of equal HFI injection into both winding sets (curve 38) is the worst for position estimation for concentrated winding generators. This may be because in this type of generators, the mutual coupling between the systems is positive and by identical injection, there would be a cancelling effect.

The dual converter operation (standard operation for current direct drive generators) injecting the HFI into one winding set (curve 36) and injecting HFI into both winding systems in anti-phase (curve 35), both show significant improvement of position estimation accuracy. This estimation technique can also be used in reduced converter operation (curve 37) where only one system is operational, i.e. only for example the first converter 9 is connected and is operated with the first winding set. The difference is again made by the mutual coupling effect between the two winding sets. In reduced converter operation (curve 37), there is no cancellation effect; for injecting HFI into both winding systems in anti-phase (curve 35), there is an adding effect from the coupling; for injecting the HFI into one winding set (curve 36), the coupling effect is partially added.

In other embodiments, the injection schemes illustrated in the table 1 may involve to use different frequencies and/or voltage amplitudes between the two or more injected signals.

In alternative embodiments, existing HFI methods may be used where the same injection is applied to the multiple systems, in particular for a distributed winding generator. This is because in this type of generators, the mutual coupling between systems is negative and identical injection may be better than a single system injection and more so than an anti-phase injection, which may be desirable for a concentrated winding topology generator design.

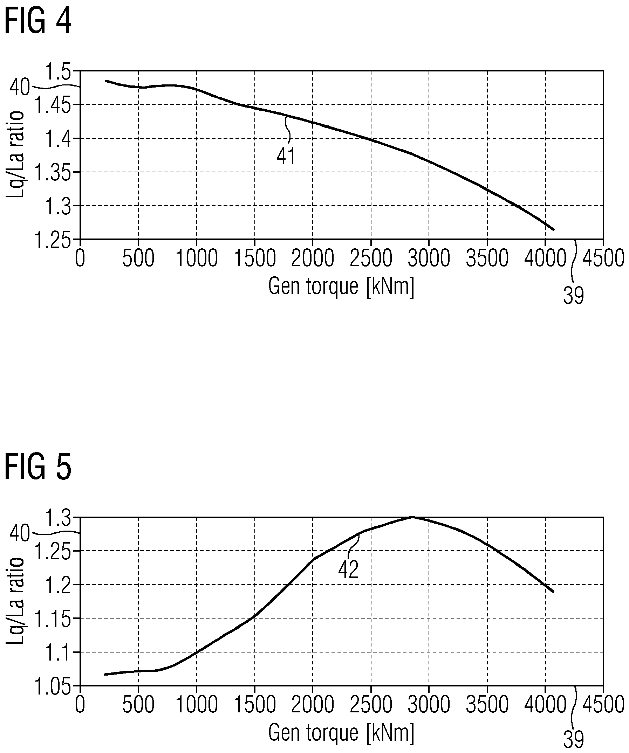

**Figs. 4 and 5** illustrate in coordinate systems having as an ordinate 39 the generator torque and having as an ordinate the saliency ratio 40 the saliency ratios for a distributed winding generator (curve 41) and for a concentrated winding generator (curve 42). Concentrated winding fraction slot generators have a relatively low saliency ratio. It is apparent that the saliency ratio is significantly lower in the case of the concentrated winding generator in comparison to the distributed integer slot generator, in particular at lower load levels.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of observing a rotor position (18, 18') of an electrical generator (5) comprising multiple winding sets, the method comprising:

   applying a first high frequency signal (12) to a first winding set;
   operating or controlling at least two of the winding sets differently;
   measuring a first response (15);
   determining a first value (18) of the rotor position based on the first response (15).

2. Method according to the preceding claim, wherein applying the first high frequency signal to the first winding set includes:
   injecting a first high frequency voltage (12), in particular by means of pulsating sinusoidal injection in a d-axis, into the first winding set.

3. Method according to one of the preceding claims, wherein the first response (15) is due to the first high frequency injection (12) and measuring the first response includes measuring a first current (15) in the first winding set, wherein determining the first value (18) of the rotor position in particular includes at least one of:

   transformation of a measured first current (15) into transformed first current in synchronous rotating dq frame (Idq) ;
   bandpass filtering (27) a measured first transformed dq current (Idq);
   demodulating (29) a measured and in particular bandpass filtered first current;
   polarity detection (30) and position observance (31) based on the demodulated current (Idhf, Iqhf).

4. Method according to one of the preceding claims, wherein injecting the first high frequency current (12) into the first winding set comprises:
   controlling a first converter (9) connected to the first winding set by adding a high frequency offset voltage (Vdhf) to a voltage reference (Vd), in particular in a d-axis of a coordinate frame rotating with a fundamental electrical frequency, wherein the first high frequency voltage in particular has a frequency higher than a fundamental frequency.

5. Method according to one of the preceding claims, wherein operating at least two of the winding sets differently includes:

   applying a high frequency signal to fewer than all winding sets;
   measuring responses at least for the winding set to which a high frequency signal is applied;
   determining one of more values of the rotor position based on the responses.

6. Method according to one of the preceding claims, wherein operating at least two of the winding sets differently includes:

   applying a second high frequency signal (22) to a second winding set, the second high frequency signal being different from the first high frequency signal (12);
   measuring a second response (23);

determining a second value (18') of the rotor position based on the second response (23).

7. Method according to one of the preceding claims,

   wherein the first winding set is connectable or connected to a first converter (9),
   wherein the second winding set is connectable or connected to a second converter (11),
   wherein during injection of the first high frequency voltage (12) into the first winding set the second converter (11) is not operated or the second winding set is connected to the second converter (11) and the second converter (11) is operated.

8. Method according to one the preceding claims, wherein the first high frequency signal (12) differs from the second high frequency signal (22) in at least one characteristic of the following characteristics:

   an amplitude;
   a frequency;
   a phase.

9. Method according to one of the preceding claims, wherein the first high frequency signal (12) differs from the second high frequency signal (22) in at least one first characteristic but is equal in at least one second characteristic, wherein the phases of the first and second high frequency signal differ by substantially $\pi$, wherein in particular amplitudes and frequencies are equal.

10. Method according to one of the preceding claims, wherein the first high frequency signal (12) differs from the second high frequency signal (22) in all characteristics.

11. Method according to one of the preceding claims,

    wherein the first high frequency signal (12) is applied to the first winding set during a time range,
    wherein the second high frequency signal (22) is applied to the second winding set during the time range.

12. Method according to one of the preceding claims, wherein at least of the following holds:

    the first and/or second winding set has concentrated or distributed winding topology,
    the generator (5) is an integer or fractional slot generator,
    the generator (5) has multiple winding sets, in particular exactly two or four winding sets,
    the generator (5) is a permanent magnet generator,
    the generator (5) is a synchronous electrical generator,
    each winding set provides plural electrical phases, in particular three phases,
    the method is applied at a low rotational speed, in particular between 0.0 and 0.2 times a nominal rotational speed, of the rotor of the generator.

13. Arrangement (6) for observing a rotor position (18, 18') of an electrical generator (5) comprising multiple winding sets, the arrangement comprising:

    a control section (7), in particular including multiple converters (9, 11) each connectable to one of the winding sets, adapted:

       to apply a first high frequency signal (12) to a first winding set;
       to operate or control at least two of the winding sets differently;

    a measurement section (13, 14) adapted:
    to measure a first response (15);
    an evaluation section (16, 16') adapted:
    to determine a first value (18) of the rotor position based on the first response (15).

14. Generator system (4), in particular of a wind turbine, including:

    an electrical generator (5) comprising multiple winding sets;

an arrangement (6) according to the preceding claim, connected to control the generator.

15. Wind turbine (1), including:

a rotor (2) at which plural rotor blades (3) are connected;
a generator system (4) according to the preceding claim, the generator (5) being coupled to the rotor (2).

FIG 1

# FIG 2

EP 4 366 153 A1

# FIG 3

## FIG 4

## FIG 5

Europäisches Patentamt
European Patent Office
Office européen des brevets

# EUROPEAN SEARCH REPORT

Application Number
EP 22 20 5587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 649 731 B1 (SIEMENS GAMESA RENEWABLE ENERGY AS [DK]) 9 June 2021 (2021-06-09)<br>* paragraphs [0001], [0051] - [0056], [0058] *<br>* paragraphs [0001], [0002], [0009] - [0011], [0038] *<br>* paragraphs [0001], [0035], [0040], [0041] *<br>* figures 4, 16 *<br>----- | 1-15 | INV.<br>H02P6/185<br>H02P25/22 |
| Y | US 2018/026559 A1 (FUJII KIYOSHI [JP] ET AL) 25 January 2018 (2018-01-25)<br>* paragraph [0088] *<br>* paragraph [0029] *<br>* paragraphs [0064], [0065], [0072] *<br>* paragraph [0073] *<br>* paragraphs [0091], [0124] *<br>* paragraph [0097] *<br>* paragraphs [0114], [0115] *<br>* figures 1, 10, 11 *<br>----- | 1,4-15 | |
| Y | CN 109 150 052 A (HARBIN INST TECHNOLOGY) 4 January 2019 (2019-01-04)<br>* abstract *<br>* Summary of the Invention *<br>* figure 1 *<br>----- | 2 | TECHNICAL FIELDS SEARCHED (IPC)<br>H02P |
| Y | US 2014/327379 A1 (YANG SHIH-CHIN [US] ET AL) 6 November 2014 (2014-11-06)<br>* paragraphs [0023] - [0025] *<br>* figure 1 *<br>----- | 3 | |
| Y | EP 3 306 811 A1 (MITSUBISHI ELECTRIC CORP [JP]) 11 April 2018 (2018-04-11)<br>* paragraphs [0044], [0119], [0120], [0151], [0152] *<br>* figures 3, 4, 9, 11, 18, 24 *<br>* paragraph [0054] *<br>----- | 3 | |

The present search report has been drawn up for all claims

1

| Place of search | Date of completion of the search | Examiner |
|---|---|---|
| Munich | 22 March 2023 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 5587

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2023

| Patent document cited in search report | | Publication date | Patent family member(s) | | Publication date |
|---|---|---|---|---|---|
| EP 3649731 | B1 | 09-06-2021 | DK | 3649731 T3 | 26-07-2021 |
| | | | EP | 3649731 A1 | 13-05-2020 |
| | | | WO | 2019030138 A1 | 14-02-2019 |
| US 2018026559 | A1 | 25-01-2018 | DE | 102017116469 A1 | 25-01-2018 |
| | | | JP | 6750364 B2 | 02-09-2020 |
| | | | JP | 2018014861 A | 25-01-2018 |
| | | | US | 2018026559 A1 | 25-01-2018 |
| CN 109150052 | A | 04-01-2019 | NONE | | |
| US 2014327379 | A1 | 06-11-2014 | US | 2014327379 A1 | 06-11-2014 |
| | | | US | 2014327380 A1 | 06-11-2014 |
| | | | US | 2016134216 A1 | 12-05-2016 |
| EP 3306811 | A1 | 11-04-2018 | CN | 107710594 A | 16-02-2018 |
| | | | EP | 3306811 A1 | 11-04-2018 |
| | | | JP | 6324627 B2 | 16-05-2018 |
| | | | JP | WO2016189694 A1 | 14-09-2017 |
| | | | US | 2018105201 A1 | 19-04-2018 |
| | | | WO | 2016189694 A1 | 01-12-2016 |

EPO FORM P0459

For more details about this annex : see Official Journal of the European Patent Office, No. 12/82